# EUROPÄISCHE PATENTANMELDUNG

(11) **EP 2 796 290 A1**
(43) Veröffentlichungstag der Anmeldung: **29.10.2014**
(21) Anmeldenummer: 13164680.4
(22) Anmeldetag: 22.04.2013
(51) Int. Cl.: B32B 27/34

(54) **Polyamid für die Verpackung von expandierbarem Polystyrolgranulat**

(71) Anmelder: BASF SE, 67056 Ludwigshafen (DE)
(72) Erfinder: Götz, Walter, 88167 Grünenbach (DE); Zeinert, Frank, 67061 Ludwigshafen (DE); Klute, Martin, 67256 Weisenheim/Sd. (DE); Bellin, Ingo, 68307 Mannheim (DE); Klein, Daniel, 68163 Mannheim (DE); Ostermann, Rainer, 67059 Ludwigshafen (DE); Anderlik, Rainer, 69126 Heidelberg (DE)
(74) Vertreter: Baier, Martin

(57) **Zusammenfassung**

Die vorliegende Erfindung betrifft die Verwendung einer Folie, die mindestens 80 Gew.-% Polyamid enthält, als Verpackungsmaterial für expandierbares Polystyrolgranulat. Darüber hinaus betrifft die Erfindung eine Verpackungseinheit, die expandierbares Polystyrolgranulat als Verpackungsinhalt und eine Folie, die mindestens 80 Gew.-% eines Polyamids enthält, als Verpackungsmaterial enthält. Weiterhin betrifft die Erfindung ein Verfahren zum Verpacken von expandierbarem Polystyrolgranulat sowie ein Verfahren zur Herstellung der Verpackungseinheit unter Verwendung einer Folie, die mindestens 80 Gew.-% eines Polyamids enthält, als Verpackungsmaterial.

## Beschreibung

Die vorliegende Erfindung betrifft die Verwendung einer Folie, die mindestens 80 Gew.-% Polyamid enthält, als Verpackungsmaterial für expandierbares Polystyrolgranulat. Darüber hinaus betrifft die Erfindung eine Verpackungseinheit, die expandierbares Polystyrolgranulat als Verpackungsinhalt und eine Folie, die mindestens 80 Gew.-% eines Polyamids enthält, als Verpackungsmaterial enthält. Weiterhin betrifft die Erfindung ein Verfahren zum Verpacken von expandierbarem Polystyrolgranulat sowie ein Verfahren zur Herstellung der Verpackungseinheit unter Verwendung einer Folie, die mindestens 80 Gew. % eines Polyamids enthält, als Verpackungsmaterial.

Expandierbares Polystyrol enthält üblicherweise ein leicht flüchtiges Treibmittel, wie beispielsweise Pentan. Expandierbares Polystyrol wird im Allgemeinen durch Dispersionspolymerisation in einem wässrigen Lösungsmittel hergestellt. Das expandierbare Polystyrol fällt bei diesem Herstellungsverfahren in Form eines Granulats an.

Das in dem expandierbaren Polystyrolgranulat enthaltene Treibmittel dient dazu, das expandierbare Polystyrolgranulat bei der Herstellung von expandierten Polystyrolformteilen aufzuschäumen. Hierzu wird das expandierbare Polystyrolgranulat üblicherweise in Formwerkzeuge eingebracht und nachfolgend erwärmt, wodurch das Granulat expandiert und das expandierte Polystyrolformteil erhalten wird.

Expandierbares Polystyrolgranulat wird üblicherweise als Schüttgut vertrieben. Als Verpackungen werden hierzu üblicherweise Verpackungssäcke, sogenannte Big *Packs*, mit einem Inliner eingesetzt. Die Außenhaut des Big Packs dient dabei der Stabilität der Verpackung. Der Inliner kleidet den Verpackungssack von innen aus. Um ein vorzeitiges Verdampfen des Treibmittels aus dem expandierbaren Polystyrolgranulat zu verhindern, werden als Inliner üblicherweise mehrschichtige Folien eingesetzt, die Polyolefine wie beispielsweise Polyethylen als Hauptkomponente enthalten. Der in dem Verpackungssack enthaltene Inliner dient somit als Barriere gegen das im expandierbaren Polystyrolgranulat enthaltene Treibmittel.

Eine solche Barriere ist notwendig, um einen Verlust an Treibmittel und den damit einhergehenden Verlust der Schäumbarkeit des Polystyrolgranulats zu verhindern. Darüber hinaus ist eine solche Barriere notwendig, um eine Kontamination der Umgebung des Lagerorts des expandierbaren Polystyrolgranulats zu verhindern. Besonders bei expandierbarem Polystyrolgranulat, welches Pentan als Treibmittel enthält, können sich ansonsten in der Umgebung des Lagerorts explosionsfähige Gasgemische aus Pentan und Luftsauerstoff bilden.

Herstellungsbedingt enthält expandierbares Polystyrolgranulat üblicherweise Wasser in Mengen von 0,1 bis 2 Gew.-%, bezogen auf das Gesamtgewicht des expandierbaren Polystyrolgranulats. Dieses Wasser entstammt dem bei der Dispersionspolymerisation eingesetzten wässrigen Lösungsmittel. Obwohl das expandierbare Polystyrolgranulat nach der Dispersionspolymerisation üblicherweise getrocknet wird, ist eine weitere Absenkung des Wassergehalts nur schwer möglich und zudem mit einem erheblichen Mehrkostenaufwand verbunden.

Bei der Lagerung von expandierbarem Polystyrolgranulat in den vorstehend beschriebenen Sackverpackungen mit Inliner, nachfolgend auch als Folienbeutel bezeichnet, kann das im expandierbaren Polystyrolgranulat enthaltene Wasser verdampfen. Das verdampfte Wasser kann nachfolgend an der Innenseite der als Inliner eingesetzten Folie kondensieren. Durch diese Wasserkondensation kommt es zu einem Verklumpen und zur Bildung von Agglomeraten im expandierbaren Polystyrolgranulat. Diese Agglomerate enthalten dabei in der Regel eine Vielzahl von expandierbaren Polystyrolpartikeln und weisen einen lokal erhöhten Wassergehalt auf.

Die Bildung solcher Agglomerate führt bei der nachfolgenden Verarbeitung des expandierbaren Polystyrolgranulats zu Formkörpern zu erheblichen Problemen. Die Agglomerate können bei der Weiterverarbeitung beispielsweise Förderaggregate verstopfen und somit zur Unterbrechung des Produktionsprozesses führen. Die Agglomerate mit erhöhtem Wassergehalt verschlechtern darüber hinaus die mechanische Integrität der aufgeschäumten Formkörper. Dies ist auf die Entstehung von Wasserdampfblasen aus den Agglomeraten bei der Herstellung besagter Formkörper zurückzuführen.

Der vorliegenden Erfindung liegt somit die Aufgabe zugrunde, ein Verpackungsmaterial bereitzustellen, dessen Verwendung die Bildung der vorstehend beschriebenen Agglomerate bei der Verpackung und Lagerung von expandierbarem Polystyrolgranulat verhindert oder zumindest vermindert. Die Verwendung des Verpackungsmaterials soll darüber hinaus eine problemlose Weiterverarbeitung des gelagerten expandierbaren Polystyrolgranulats ermöglichen. Die Bildung explosionsfähiger Gasgemische aus Treibmittel und Luftsauerstoff in der Umgebung des Lagerorts des expandierbaren Polystyrolgranulats soll verhindert werden. Die aus dem expandierbaren Polystyrolgranulat (nach Lagerung) hergestellten expandierten Polystyrolformkörper sollen gute mechanische Eigenschaften aufweisen.

Gelöst wird diese Aufgabe durch die Verwendung einer Folie als Verpackungsmaterial für expandierbares Polystyrolgranulat, dadurch gekennzeichnet, dass die Folie mindestens 80 Gew.-% eines Polyamids enthält, bezogen auf das Gesamtgewicht der Folie.

Es wurde festgestellt, dass bei der Verwendung der vorstehend beschriebenen Folie als Verpackungsmaterial bei der Lagerung von expandierbarem Polystyrolgranulat die Bildung von Agglomeraten, die eine Vielzahl von expandierbaren Polystyrolpartikeln mit einem lokal erhöhten Wassergehalt aufweisen, auch bei längerer Lagerung sicher verhindert werden kann. Bei der erfindungsgemäßen Verwendung einer Folie, die mindestens 80 Gew.-% eines Polyamids aufweist, als Verpackungsmaterial, lässt sich expandierbares Polystyrolgranulat über lange Zeiträume ohne eine Veränderung beziehungsweise Verschlechterung der Produktspezifikation lagern. Darüber hinaus wird die Kontamination der Umgebung des Lagerorts des expandierbaren Polystyrolgranulats und somit die Bildung explosionsfähiger Gasgemische aus Treibmittel und Luftsauerstoff zuverlässig verhindert.

### Expandierbares Polvstvrolqranulat EPS); Verpackungsinhalt

Unter Verwendung der Folie, die mindestens 80 Gew. % Polyamid enthält, können praktisch alle bekannten expandierbaren Polystyrolgranulate verpackt werden. Bei der erfindungsgemäßen Verwendung stellt das expandierbare Polystyrolgranulat den Verpackungsinhalt und die Folie, die mindestens 80 Gew.-% Polyamid enthält, das Verpackungsmaterial dar. Die Gew.-%-Angaben des Polyamids im Hinblick auf die verwendete Folie beziehen sich vorliegend immer auf das Gesamtgewicht der verwendeten Folie.

Expandierbares Polystyrolgranulat wird auch als EPS bezeichnet. Für die erfindungsgemäße Verwendung geeignetes EPS sowie dessen Herstellung sind dem Fachmann an sich bekannt.

Für die erfindungsgemäße Verwendung ist EPS geeignet, das im Allgemeinen 0,01 bis 5,0 Gew.-%, bevorzugt 0,05 bis 2,0 Gew.-% Wasser und besonders bevorzugt 0,1 bis 1 Gew.-% Wasser, bezogen auf das Gesamtgewicht des EPS enthält. Das EPS enthält im Allgemeinen 1 bis 10 Gew.-%, bevorzugt 2 bis 6 Gew.-%, und besonders bevorzugt 3 bis 5 Gew. % mindestens eines Treibmittels mit einem Siedepunkt im Bereich von 28 bis 100 °C (gemessen bei Normaldruck 1013,25 mbar = 1 atm).

In einer bevorzugten Ausführungsform enthält das EPS als Treibmittel mindestens einen Kohlenwasserstoff ausgewählt aus der Gruppe bestehend aus Butanen, Pentanen und Hexanen. Unter dem Begriff "Treibmittel" werden vorliegend sowohl genau ein Treibmittel als auch Mischungen aus zwei oder mehreren Treibmitteln verstanden.

Unter Butanen, Pentanen und Hexanen werden vorliegend sowohl n-Butan, n-Pentan und n-Hexan als auch deren Isomere verstanden. Als Treibmittel bevorzugt sind Pentane, wobei n-Pentan besonders bevorzugt ist.

Bevorzugt ist EPS, welches 88 bis 98 Gew.-% Polystyrol, 0,05 bis 2,0 Gew.-% Wasser und 1 bis 10 Gew.-% Treibmittel enthält, wobei die Gew.-%-Angaben jeweils bezogen sind auf das Gesamtgewicht des EPS und wobei die Summe der Gew.-%-Angaben 100 Gew.-% ergibt.

Als Polystyrolkomponente (Polystyrol) kann das EPS beispielsweise ein Homopolymer (CAS Nummer 9003-53-6) enthalten, welches sich von Styrol (Vinylbenzol) als Monomer ableitet. Solche Homopolymere weisen in der Polymerkette ausschließlich Ethylbenzoleinheiten auf.

Die Polystyrolkomponente kann darüber hinaus weitere übliche Additive, wie beispielsweise Flammschutzmittel enthalten. Neben Homopolymeren können darüber hinaus auch Copolymere eingesetzt werden, die sich von Styrol und einem weiteren ethylenischen Monomer ableiteten. Bevorzugt sind jedoch Polystyrolkomponenten, die mindestens 95 Gew.-% Ethylbenzoleinheiten aufweisen, bezogen auf das Gesamtgewicht der Polystyrolkomponente.

Die Dichte geeigneter EPS liegt üblicherweise im Bereich von 1,02 bis 1,05 g/ml. Die Partikelgröße der einzelnen Granulat-Partikel liegt üblicherweise im Bereich von 0,2 bis 5 mm.

Geeignetes EPS ist beispielsweise unter den Handelsnamen Styropor^{®} oder Peripor^{®} der BASF SE erhältlich.

Folie, die mindestens 80 Gew.-% Polyamid enthält; Verpackungsmaterial

Erfindungsgemäß wird eine Folie, die mindestens 80 Gew.-% Polyamid enthält, als Verpackungsmaterial für EPS verwendet. Unter Polyamid wird vorliegend sowohl genau ein Polyamid als auch eine Mischung aus zwei oder mehreren Polyamiden verstanden. Für den Fall, dass als Polyamid eine Mischung aus zwei oder mehreren Polyamiden eingesetzt wird, werden die Gewichtsprozentanteile der verschiedenen Polyamide aufsummiert. Entscheidend ist, dass die Folie in Summe mindestens 80 Gew.-% Polyamid enthält, bezogen auf das Gesamtgewicht der Folie.

Geeignete Polyamide weisen im Allgemeinen eine Viskositätszahl von 150 bis 350, vorzugsweise von 180 bis 275 ml/g auf. Die Bestimmung der Viskositätszahl erfolgt dabei aus einer 0,5-gew.-%igen Lösung des Polyamids in 96-gew.-%iger Schwefelsäure bei 25 °C gemäß ISO 307.

Als Polyamide sind halbkristalline oder amorphe Polyamide bevorzugt.

Als Polyamide für die Folie sind beispielsweise Polyamide geeignet, die sich von Lactamen mit 7 bis 13 Ringgliedern ableiten. Darüber hinaus sind Polyamide geeignet, die durch Umsetzung von Dicarbonsäuren mit Diaminen erhalten werden.

Als Polyamide, die sich von Lactamen ableiten, seien beispielhaft Polyamide erwähnt, die sich von Polycaprolactam, Polycapryllactam und/oder Polylaurinlactam ableiten.

Für den Fall, dass Polyamide eingesetzt werden, die aus Dicarbonsäuren und Diaminen erhältlich sind, können als Dicarbonsäurealkane Dicarbonsäuren mit 6 bis 14 Kohlenstoffatomen, bevorzugt 6 bis 10 Kohlenstoffatomen, eingesetzt werden. Darüber hinaus sind aromatische Dicarbonsäuren geeignet.

Beispielhaft seien hier Adipinsäure, Azelainsäure, Sebacinsäure, Dodecandicarbonsäure sowie Terephthalsäure und/oder Isophtalsäure als Dicarbonsäuren genannt.

Als Diamine eigenen sich beispielsweise Alkandiamine mit 4 bis 14 Kohlenstoffatomen, insbesondere Alkandiamine mit 6 bis 8 Kohlenstoffatomen sowie aromatische Diamine, wie beispielsweise m-Xylylendiamin, Di-(4-aminophenyl)methan, Di-(4-aminocyclohexyl)-methan, 2,2-Di-(4-aminophenyl)-propan, 2,2-Di-(4-aminocyclohexyl)-propan oder 1,5-Diamino-2-methyl-pentan.

Weiterhin sind Polyamide geeignet, die durch Copolymerisation zweier oder mehrerer der vorstehend und nachstehend genannten Monomeren erhältlich sind, oder Mischungen mehrerer Polyamide, wobei das Mischungsverhältnis beliebig ist.

Bevorzugt als Polyamide sind Polyhexamethylenadipinsäureamid, Polyhexamethylensebacinsäureamid und Polycaprolactam sowie Copolyamid 6/66 insbesondere mit einem Anteil von 75 bis 95 Gew.-% an Caprolactam-Einheiten.

Besonders bevorzugt sind Mischungen von Polyamid 6 mit anderen Polyamiden, insbesondere mit Copolyamid 6/66 (PA6/66), besonders bevorzugt Mischungen aus 80 bis 50 Gew.-% PA6 und 20 bis 50 Gew.-% PA6/66, wobei das PA6/66 75 bis 95 Gew.-% Caprolactameinheiten aufweist, bezogen auf das Gesamtgewicht des PA 6/66 in der Mischung..

Die nachfolgende, nicht abschließende Aufstellung enthält die vorstehend genannten sowie weitere geeignete Polyamide sowie die enthaltenen Monomere.

AB-Polymere:
- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

AA/BB-Polymere:
- PA 46: Tetramethylendiamin, Adipinsäure
- PA 66: Hexamethylendiamin, Adipinsäure
- PA 69: Hexamethlyendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA MXD6: m-Xylyendiamin, Adipinsäure

- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Gegenstand der vorliegenden Erfindung ist somit auch die Verwendung einer Folie, die mindestens 80 Gew.-%, bevorzugt mindestens 90 Gew.-%, besonders bevorzugt mindestens 95 Gew.-% mindestens eines der vorgenannten Polyamide enthält, jeweils bezogen auf das Gesamtgewicht der Folie.

Gegenstand der vorliegenden Erfindung ist somit auch die Verwendung einer Folie, die mindestens 80 Gew.-% mindestens eines Polyamids ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA1313, PA 6T, PA MXD6, PA 6I, PA 6-3-T, PA 6/6T, PA 6/66, PA 6/12, PA 66/6/610, PA 61/6T, PA PACM 12, PA 6I/6T/PACM, PA 12/MACMI, PA 12/MACMT und PA PDA-T enthält, jeweils bezogen auf das Gesamtgewicht der Folie.

Bevorzugt enthält die Folie mindestens 80 Gew.-% mindestens eines Polyamids ausgewählt aus der Gruppe bestehend aus PA 6, PA 66, PA 610, PA6 12, PA 11, PA 12, PA MXD6, PA 6/66 und PA 6/12, jeweils bezogen auf das Gesamtgewicht der Folie.

Besonders bevorzugt enthält die Folie mindestens 80 Gew.-% mindestens eines Polyamids ausgewählt aus der Gruppe PA6 und PA6/66, jeweils bezogen auf das Gesamtgewicht der Folie.

In einer weiteren bevorzugten Ausführungsform ist die erfindungsgemäß verwendete Folie im Wesentlichen frei von polyolefinbasierten Polymeren, wie beispielsweise Polyethylen. Unter "im Wesentlichen frei von" wird vorliegend verstanden, dass die erfindungsgemäß verwendete Folie weniger als 1 Gew.-%, bevorzugt weniger als 0,5 Gew.-% und insbesondere bevorzugt weniger als 0,1 Gew.-% eines polyolefinbasierten Polymers enthält. In einer weiteren bevorzugten Ausführungsform enthält die Folie keine polyolefinbasierten Polymere. Insbesondere enthält die erfindungsgemäß verwendete Folie kein Polyethylen.

Die erfindungsgemäß verwendete Folie weist im Allgemeinen eine Dicke im Bereich von 20 bis 200 µm, bevorzugt im Bereich von 30 bis 120 µm und besonders bevorzugt im Bereich von 50 bis 100 µm auf.

Gegenstand der vorliegenden Erfindung ist somit auch die Verwendung einer Folie, die eine Dicke im Bereich von 20 bis 200 µm aufweist.

Die erfindungsgemäß verwendete Folie kann einschichtig sein. Es ist erfindungsgemäß auch möglich, mehrschichtige Folien zu verwenden. In diesem Fall weist die Folie im Allgemeinen 2 bis 11 Schichten auf. Für den Fall, dass eine mehrschichtige Folie verwendet wird, weist die Folie eine Innenschicht und eine Außenschicht auf.

Unter "Innenschicht" wird vorliegend die Schicht der Folie verstanden, die dem EPS zugewandt ist. Unter "Außenschicht" wird vorliegend die Schicht der Folie verstanden, die dem EPS abgewandt ist. Für den Fall einer Folie, die mindestens drei Schichten aufweist, befindet sich zwischen der Außen- und der Innenschicht der Folie mindestens eine Zwischenschicht. Für den bevorzugten Fall einer dreischichtigen Folie befindet sich zwischen der Außen- und der Innenschicht genau eine Zwischenschicht. Für den Fall von Folien, die mehr als drei Schichten aufweisen, befinden sich zwischen Innenschicht und Außenschicht mindestens zwei Zwischenschichten.

Gegenstand der vorliegenden Erfindung ist somit auch die Verwendung einer mehrschichtigen Folie, die eine dem expandierbaren Polystyrolgranulat zugewandte Innenschicht und eine dem expandierbaren Polystyrolgranulat abgewandte Außenschicht sowie gegebenenfalls mindestens eine Zwischenschicht zwischen der Innen- und der Außenseite enthält.

Die Herstellung solcher Folien ist dem Fachmann an sich bekannt und kann beispielsweise durch Coextrusion der einzelnen Schichten erfolgen. Für den Fall von mehrschichtigen Folien können für die einzelnen Schichten bevorzugt unterschiedliche Polyamide eingesetzt werden. Es ist auch möglich, für alle Schichten das gleiche Polyamid einzusetzen.

Im Fall von mehrschichtigen Folien weist in einer bevorzugten Ausführungsform jede der Schichten der Folie einen Polyamidgehalt von mindestens 80 Gew.-% auf.

Gegenstand der vorliegenden Erfindung ist somit auch die Verwendung einer Folie, die dadurch gekennzeichnet ist, dass die Innenschicht, die Außenschicht und eine gegebenenfalls enthaltende Zwischenschicht jeweils mindestens 80 Gew.-% eines Polyamids enthalten, jeweils bezogen auf das Gesamtgewicht der Innen-, Außen sowie der gegebenfalls enthaltenen Zwischenschicht.

Bevorzugt werden für die Innen- und die Außenschicht der Folie unterschiedliche Zusammensetzungen eingesetzt. In einer bevorzugten Ausführungsform weist die Zusammensetzung der Innenschicht der Folie einen Schmelzpunkt, gemessen nach ISO 3146 auf, der 5 °C bis 50 °C, bevorzugt 10 bis 30 °C unterhalb des Schmelzpunkts der Zusammensetzung für die Außenschicht der Folie liegt. Im Fall von PolyamidMischungen in der Außenschicht ist hier der höhere der Schmelzpunkte der verwendeten Komponenten der Außenschicht maßgeblich.

Gegenstand der vorliegenden Erfindung ist somit auch die Verwendung einer Folie, die dadurch gekennzeichnet ist, dass die als Innenschicht eingesetzte Zusammensetzung einen Schmelzpunkt aufweist, der mindestens 10 °C unterhalb des Schmelzpunktes der Zusammensetzung der Außenschicht liegt.

Durch die unterschiedlichen Schmelzpunkte zwischen Innen- und Außenschicht wird die Verpackung des EPS erleichtert. Das Verschließen von folienbasierten Verpackungsmaterialien erfolgt üblicherweise durch Verschweißen. Hierbei werden zwei Innenschichten der Folie aufeinander gelegt und auf Temperaturen oberhalb des Schmelzpunkts der Innenschicht erwärmt. Hierdurch wird nach Abkühlen eine feste Verbindung zwischen den beiden Innenschichten erreicht. Geeignete Verfahren zum Verschweißen von folienbasierten Verpackungsmaterialien sind dem Fachmann bekannt.

In einer bevorzugten Ausführungsform wird als Innenschicht der Folie eine Zusammensetzung verwendet, die einen Schmelzpunkt im Bereich von 180 bis 200 °C aufweist, und als Außenschicht der Folie wird eine Zusammensetzung verwendet, die einen Schmelzpunkt im Bereich von 210 bis 250 °C aufweist.

Die Dicke der Innenschicht macht im Allgemeinen 5 bis 30 %, bevorzugt 10 bis 25 % der Gesamtdicke der erfindungsgemäß verwendeten Folie aus. Gegenstand der vorliegenden Erfindung ist somit auch die Verwendung einer Folie, die dadurch gekennzeichnet ist, dass die Dicke der Innenschicht 5 bis 30 % der Gesamtdicke der Folie beträgt.

In einer bevorzugten Ausführungsform enthält die Außenschicht der erfindungsgemäß verwendeten Folie mindestens ein Antistatikum. Solche Antistatika werden aus Gründen der Arbeitssicherheit eingesetzt, um die Oberfläche der als Verpackungsmaterial verwendeten Folie antistatisch auszurüsten. In einer bevorzugten Ausführungsform weist die erfindungsgemäß verwendete Folie eine Oberflächenleitfähigkeit von < 10¹⁰*cm bei einer Temperatur von 23 °C und einer Restfeuchte von 30 % auf. Bei 23 °C und einer Restfeuchte von 50 % weist die erfindungsgemäß verwendete Folie bevorzugt eine Oberflächenleitfähigkeit von < 108*cm auf. Bei einer Temperatur von 23 eine Restfeuchte von 70 % weist die erfindungsgemäß verwendete Folie bevorzugt eine Oberflächenleitfähigkeit von < 10⁷*cm auf.

Als Antistatika können beispielsweise Ruß oder Carbon-Nanotubes eingesetzt werden.

In einer bevorzugten Ausführungsform weist die erfindungsgemäß verwendete Folie eine Wasserpermeation von > 5 g/m², bevorzugt > 10 g/m², gemessen nach ISO 15106 bei 23 °C und 85 % rel. Feuchte, auf.

Durch die hohe Wasserpermeabilität der erfindungsgemäß verwendeten Folie kann das im gelagerten EPS enthaltene Wasser durch die als Verpackungsmaterial verwendete Folie entweichen, so dass die Bildung der vorstehend beschriebenen Agglomerate und die damit verbundenen Probleme verhindert bzw. vermindert werden.

### Verpackungseinheit

Gegenstand der vorliegenden Erfindung ist auch eine Verpackungseinheit, die expandierbares Polystyrolgranulat (EPS) als Verpackungsinhalt und eine Folie, die mindestens 80 Gew.-% eines Polyamids enthält, als Verpackungsmaterial enthält, wobei die Gew.-% auf das Gesamtgewicht der Folie bezogen sind.

Gegenstand der vorliegenden Erfindung ist somit auch eine Verpackungseinheit, die expandierbares Polystyrol als Verpackungsinhalt und eine Folie als Verpackungsmaterial enthält, wobei die Folie mindestens 80 Gew.-% eines Polyamids, bezogen auf das Gesamtgewicht der Folie, enthält.

Die Verpackungseinheit umfasst dabei EPS in Mengen von 20 bis 2000 kg, bevorzugt in Mengen von 25 kg bis 1000 kg. Die als Verpackungsmaterial enthaltene Folie kann in der erfindungsgemäßen Verpackungseinheit als Sack oder sogenannter Inliner für Big Packs vorliegen.

Für die Verpackungseinheit gelten die vorstehend gemachten Ausführungen zur erfindungsgemäßen Verwendung der Folie entsprechend. Die dort angeführten Bevorzugungen gelten ebenfalls entsprechend. Bevorzugt sind Verpackungseinheiten, die die Folie als sogenannten Inliner enthalten. Die Folie kann in der Verpackungseinheit als Sack oder beispielsweise als Schlauchbeutel vorliegen.

Durch die erfindungsgemäße Verpackungseinheit wird es ermöglicht, EPS über längere Zeit zu lagern, ohne dass Veränderungen in der Spezifikation des EPS auftreten. Insbesondere wird die Bildung von Agglomeraten mit lokal erhöhtem Wassergehalt verhindert.

Weiterhin Gegenstand der Erfindung ist ein Verfahren zur Herstellung der erfindungsgemäßen Verpackungseinheit. Hierzu wird eine Folie, die mindestens 80 Gew.-% Polyamid enthält, bereitgestellt. Die Folie wird hierzu bevorzugt in Form eines Sacks oder eines Schlauchbeutels, der mindestens eine Öffnung aufweist, bereitgestellt. Nach der Bereitstellung des Verpackungsmaterials wird dieses mit EPS gefüllt. Die als Verpackungsmaterial eingesetzte Folie wird nachfolgend verschlossen. Dies kann beispielsweise durch Verschweißen erfolgen.

## Patentansprüche

1. Verwendung einer Folie als Verpackungsmaterial für expandierbares Polystyrolgranulat, **dadurch gekennzeichnet, dass** die Folie mindestens 80 Gew.-% eines Polyamids enthält, bezogen auf das Gesamtgewicht der Folie.

2. Verwendung gemäß Anspruch 1, **dadurch gekennzeichnet, dass** das expandierbare Polystyrolgranulat 0,05 bis 2,0 Gew.-% Wasser enthält, bezogen auf das Gesamtgewicht des expandierbaren Polystyrolgranulats.

3. Verwendung gemäß Anspruch 1 oder 2, **dadurch gekennzeichnet, dass** das expandierbare Polystyrolgranulat 1 bis 10 Gew.-% eines Treibmittels mit einem Siedepunkt im Bereich von 28 bis 100 °C enthält, bezogen auf das Gesamtgewicht des expandierbaren Polystyrolgranulats.

4. Verwendung gemäß Anspruch 3, **dadurch gekennzeichnet, dass** das expandierbare Polystyrolgranulat als Treibmittel mindestens ein Kohlenwasserstoff ausgewählt aus der Gruppe bestehend aus Butanen, Pentanen und Hexanen enthält.

5. Verwendung gemäß einem der Ansprüche 1 bis 4, **dadurch gekennzeichnet, dass** die Folie eine Dicke im Bereich von 20 bis 200 µm aufweist.

6. Verwendung gemäß einem der Ansprüche 1 bis 5, **dadurch gekennzeichnet, dass** die Folie auf der dem expandierbaren Polystyrolgranulat abgewandten Außenseite bei einer Temperatur von 23 °C und einer Restfeuchte von 30 % eine Oberflächenleitfähigkeit von < 10¹⁰ Ω * cm aufweist.

7. Verwendung gemäß einem der Ansprüche 1 bis 6, **dadurch gekennzeichnet, dass** die Folie eine mehrschichtige Folie ist, die eine dem expandierbaren Polystyrolgranulat zugewandte Innenschicht und eine dem expandierbaren Polystyrolgranulat abgewandte Außenschicht sowie gegebenenfalls mindestens eine Zwischenschicht zwischen der Innen- und der Außenschicht enthält.

8. Verwendung gemäß einem der Ansprüche 1 bis 7, **dadurch gekennzeichnet, dass** die Innenschicht, die Außenschicht und eine gegebenenfalls enthaltene Zwischenschicht jeweils mindestens 80 Gew.-% eines Polyamids enthalten, jeweils bezogen auf das Gesamtgewicht der Innen-, Außen- sowie der gegebenenfalls enthaltenen Zwischenschicht.

9. Verwendung gemäß einem der Ansprüche 1 bis 8, **dadurch gekennzeichnet, dass** die als Innenschicht eingesetzte Zusammensetzung einen Schmelzpunkt aufweist, der mindestens 10 °C unterhalb des Schmelzpunkts der Zusammensetzung der Außenschicht liegt.

10. Verwendung gemäß einem der Ansprüche 7 bis 9, **dadurch gekennzeichnet, dass** die Dicke der Innenschicht 5 bis 30 % der Gesamtdicke der Folie beträgt.

11. Verwendung gemäß einem der Ansprüche 1 bis 10, **dadurch gekennzeichnet, dass** die Außenschicht mindestens ein Antistatikum enthält.

12. Verwendung gemäß einem der Ansprüche 1 bis 11, **dadurch gekennzeichnet, dass** die Folie mindestens ein Polyamid ausgewählt aus der Gruppe bestehend aus PA 4, PA 6, PA 7, PA 8, PA 9, PA 11, PA 12, PA 46, PA 66, PA 69, PA 610, PA 612, PA 613, PA 1212, PA1313, PA 6T, PA MXD6, PA 6I, PA 6-3-T, PA 6/6T, PA 6/66, PA 6/12, PA 66/6/610, PA 61/6T, PA PACM 12, PA 61/6T/PACM, PA 12/MACMI, PA 12/MACMT und PA PDA-T enthält.

13. Verwendung gemäß einem der Ansprüche 1 bis 12, **dadurch gekennzeichnet, dass** die Folie mindestens 90 Gew.-% eines Polyamids enthält.

14. Verpackungseinheit enthaltend expandierbares Polystyrol als Verpackungsinhalt und eine Folie als Verpackungsmaterial, wobei die Folie mindestens 80 Gew.-% eines Polyamids, bezogen auf das Gesamtgewicht der Folie, enthält.
